# EUROPEAN PATENT SPECIFICATION

(11) **EP 2 902 190 B1**
(45) Date of publication and mention of the grant of the patent: **01.02.2017**
(21) Application number: 12885295.1
(22) Date of filing: 27.12.2012
(51) Int. Cl.: B32B 15/085, B32B 9/00, G02B 5/26

(54) **TRANSPARENT LAMINATE FILM**
TRANSPARENTE MEHRSCHICHTFOLIE
FILM STRATIFIÉ TRANSPARENT

(30) Priority: 28.09.2012 JP 2012215950
(43) Date of publication of application: 05.08.2015
(73) Proprietor: Sumitomo Riko Company Limited, Komaki-shi, Aichi 485-8550 (JP)
(72) Inventor: INUDUKA, Masataka, Komaki-shi Aichi 485-8550 (JP); NARASAKI Tetsuji, Komaki-shi Aichi 485-8550 (JP); IKENO, Shoichi, Komaki-shi Aichi 485-8550 (JP); HIROSE, Masafumi, Komaki-shi Aichi 485-8550 (JP); USHIO, Motonori, Komaki-shi Aichi 485-8550 (JP); TAKEUCHI, Tetsuya, Komaki-shi Aichi 485-8550 (JP)
(74) Representative: Müller-Boré & Partner Patentanwälte PartG mbB
(86) International application number: PCT/JP2012/083803
(87) International publication number: WO 2014/049891

(56) References cited:
- EP-A1- 0 644 919
- WO-A1-2011/062084
- JP-A- 2000 117 919
- JP-B2- H0 694 205
- US-A- 5 227 185
- US-A1- 2012 076 986

## Description

### Technical Field

The present invention relates to a transparent laminate film that can be suitably used for a window glass of an architecture such as a building and a house or a vehicle such as an automobile.

### Background Art

Conventionally, a heat-ray reflecting film is attached on a window glass of an architecture such as a building and a house or a vehicle such as an automobile in order to shield solar radiation. Since the film is attached on the window glass, the film is required to have high transparency as well as to highly shield the solar radiation. The heat-ray reflecting film has, for example, a multilayer in which metal oxide layers and metal layers are alternately laminated (see PTL1 and PTL2). Having the multilayer, the heat-ray reflecting film has an excellent thermal insulation property, and thus assists heating and cooling in a room effectively.

### Citation List

### Patent Literature

PTL1: JP 2011-104887 A
PTL2: JP 2012-030577 B

### Summary of Invention

### Technical Problem

A protective layer is formed on the multilayer of the heat-ray reflecting film in order to protect the multilayer. However, the heat-ray reflecting film disclosed in PTL1 has a protective film made of a polycycloolefin, and thus the surface of the heat-ray reflecting film is easy to be scratched. The heat-ray reflecting film disclosed in PTL2 has a protective film made of a cured resin. Thus, stress applied by a squeegee during attachment of the film is easily transmitted to the multilayer, and may causes damage in the film. Further, the film may be deteriorated by salt-water corrosion.

An object of the present invention is to provide a transparent laminate film that can relax stress applied by a squeegee during attachment of the film, and is protected from deterioration by salt-water corrosion, as well as has excellent solar-radiation shielding property, transparency, thermal insulation property, and scratch resistance.

### Solution to Problem

In order to solve the problem, a transparent laminate structure according to a preferred embodiment of the present invention has a transparent polymer film; a transparent multilayer placed above the transparent polymer film, the transparent multilayer having one or more metal oxide layers and one or more metal layers laminated alternately; a pressure-sensitive adhesive layer placed above and in contact with the transparent multilayer; a polyolefin layer placed above and in contact with the pressure-sensitive adhesive layer; and a cured resin layer placed above the polyolefin layer.

The polyolefin layer preferably has a wet tension of 35 mN/m or higher on a surface thereof in contact with the pressure-sensitive adhesive layer. Further, it is preferable that the surface of the polyolefin layer in contact with the pressure-sensitive adhesive layer is corona treated.

It is preferable that the transparent laminate film has a layer, in contact with the cured resin layer, that has a wet tension of 43 mN/m or higher on a surface thereof in contact with the cured resin layer. Further, it is preferable that the transparent laminate film has an easy-adhesion layer on a surface of the polyolefin layer facing the cured resin layer, the easy-adhesion layer being in contact with the cured resin layer. In this case, the easy-adhesion layer serves as the layer in contact with the cured resin layer. The easy-adhesion layer is preferably a modified polyolefin layer that has a polar functional group on a surface thereof in contact with the cured resin layer.

The pressure-sensitive adhesive layer preferably has a thickness within a range of 1.0 to 5.0 µm. The cured resin layer preferably has a thickness within a range of 1.0 to 2.0 µm. The polyolefin layer preferably has a thickness within a range of 10 to 30 µm

### Advantageous Effects of Invention

The transparent laminate film according to the preferred embodiment of the present invention has the transparent polymer film; the transparent multilayer placed above the transparent polymer film, the transparent multilayer having the one or more metal oxide layers and the one or more metal layers laminated alternately; the pressure-sensitive adhesive layer placed above and in contact with the transparent multilayer; the polyolefin layer placed above and in contact with the pressure-sensitive adhesive layer; and the cured resin layer placed above the polyolefin layer. Thus, the transparent laminate film can relax stress applied by a squeegee during attachment of the film, and is protected from deterioration by salt-water corrosion, as well as has excellent solar-radiation shielding property, transparency, thermal insulation property, and scratch resistance.

Salt-water corrosion could be caused by intrusion of salt water to the metal layers contained in the transparent multilayer from a cut surface (i.e., edge) of the transparent laminate film, or from the surface of the transparent laminate film. However, it is presumed that, since the pressure-sensitive adhesive layer in contact with the transparent multilayer has small shrinkage, peeling of the metal oxide layers caused by shrinkage stress is suppressed so that intrusion of the salt water to the metal layers (i.e., progress of corrosion in the metal layers) from the cut surface (i.e., edge) of the transparent multilayer. It is also presumed that, the polyolefin layer suppresses intrusion of the salt water to the metal layers from the surface of the transparent laminate film.

When the polyolefin layer has the wet tension of 35 mN/m or higher on the surface thereof in contact with the pressure-sensitive adhesive layer, excellent adhesion is achieved between the polyolefin layer and the pressure-sensitive adhesive layer. Thus, peeling of the pressure-sensitive adhesive layer from the polyolefin layer is suppressed. Further, when the surface of the polyolefin layer in contact with the pressure-sensitive adhesive layer is corona treated, the wet tension of the polyolefin layer on the surface is effectively increased.

When the transparent laminate film has the layer, in contact with the cured resin layer, that has the wet tension of 43 mN/m or higher on the surface thereof in contact with the cured resin layer, excellent adhesion is provided between the layer and the cured resin layer, and thus the cured resin layer is hard to be peeled off. Further, when the transparent laminate film has the easy-adhesion layer on the surface of the polyolefin layer facing the cured resin layer, and the easy-adhesion layer is in contact with the cured resin layer, adhesion on the surface in contact with the cured resin layer is increased. When the easy-adhesion layer is the modified polyolefin layer that has the polar functional group on the surface thereof in contact with the cured resin layer, adhesion on the surface in contact with the cured resin layer is effectively increased.

When the pressure-sensitive adhesive layer has the thickness within the specific range, excellent adhesion between the polyolefin layer and the pressure-sensitive adhesive layer and an excellent insulation property are both achieved. When the cured resin layer has the thickness within the specific range, an excellent insulation property and excellent scratch resistance are both achieved. When the polyolefin layer has the thickness within a range of 10 to 30 µm, an excellent effect of relaxing the stress applied by the squeegee and an excellent insulation property are both achieved.

### Brief Description of Drawings

Figure 1 is a cross-sectional view showing a transparent laminate film according to a preferred embodiment of the present invention.
Figure 2 is a cross-sectional view showing the transparent laminate film according to the preferred embodiment of the present invention when attached on a window glass.
Figure 3 is a cross-sectional view showing a transparent laminate film according to another preferred embodiment of the present invention.
Figure 4 is a plot showing a relationship between wet tension and adhesion at an interface between a pressure-sensitive adhesive layer and a polyolefin layer.
Figure 5 is a plot showing a relationship between wet tension and adhesion at an interface between a polyolefin layer and a cured resin layer.

### Description of Embodiments

A detailed description of a transparent laminate film according to a preferred embodiment of the present invention will now be provided.

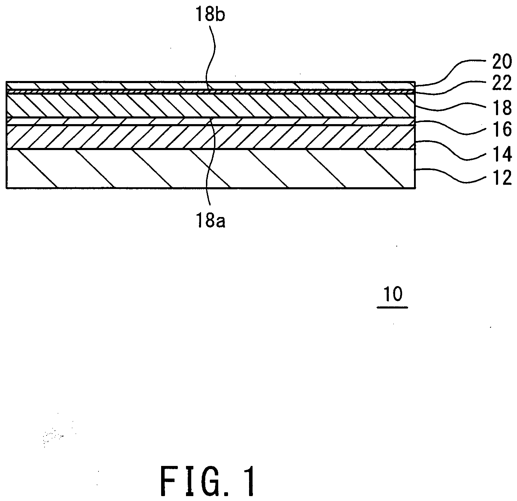

Figure 1 is a cross-sectional view showing a transparent laminate film according to a preferred embodiment of the present invention. As illustrated in Fig. 1, the transparent laminate film 10 contains a transparent polymer film 12, a transparent multilayer 14, a pressure-sensitive adhesive layer 16, a polyolefin layer 18, and a cured resin layer 20. The transparent multilayer 14 is placed on a surface of the transparent polymer film 12. The pressure-sensitive adhesive layer 16 is placed in contact with the transparent multilayer 14 while the polyolefin layer 18 is placed in contact with the pressure-sensitive adhesive layer 16. Further, an easy-adhesion layer 22 is formed on a surface 18b of the polyolefin layer 18 facing the cured resin layer 20. The easy-adhesion layer 22 is in contact with the cured resin layer 20.

The transparent polymer film 12 acts as a base substrate on which the transparent multilayer 14 is formed. To form the transparent polymer film 12, any material may be used, as far as the material has transparency in the visible region, and as far as layers can be formed without any difficulty on the surface thereof.

Specific examples of the material for the transparent polymer film 12 include polymer materials such as polyethyleneterephthalate, polycarbonate, polymethylmethacrylate, polyethylene, polypropylene, ethylene-vinyl acetate copolymer, polystyrene, polyimide, polyamide, polybutyleneterephthalate, polyethylenenaphthalate, polysulfone, polyethersulfone, polyetheretherketone, polyvinyl alcohol, polyvinyl chloride, polyvinylidene chloride, triacetylcellulose, polyurethane,andcyclo-olefin polymer. These materials may be contained in the polymer film 12 singly or in combination. Among them, from the viewpoint of having excellent transparency, durability, and workability, particularly preferable examples include polyethyleneterephthalate, polycarbonate, polymethylmethacrylate, and cyclo-olefin polymer.

The transparent multilayer 14 has a multilayer laminate structure in which one or more metal oxide layers and one or more metal layers are alternately laminated in the order of a metal oxide layer/a metal layer/ a metal oxide layer/..., from a side facing the transparent polymer film 12. It is preferable that the innermost layer facing the transparent polymer film 12 and the outermost layer facing away from the transparent polymer film 12 are metal oxide layers. Each of the metal layers may be covered with barrier layer(s) on one or both surfaces thereof. Since the barrier layers are attached to the metal oxide layers, one metal oxide layer including one or two barrier layers is counted as one layer. The barrier layers inhibit diffusion of elements constituting the metal layers into the metal oxide layers.

The metal oxide layers improve transparency (i.e., transmittance in the visible range) of the transparent multilayer 14 when laminated together with the metal layers, and the metal oxide layers act primarily as high-refractive-index layers. Here, a high refractive index denotes a refractive index of 1.7 or higher with respect to light having a wavelength of 633 nm. The metal layers mainly act as solar-radiation shielding layers. Having the transparent multilayer 14, the transparent laminate film 10 has good visible light transmittance (i.e., transparency), solar-radiation shielding property, and thermal insulation property.

The number of layers in the transparent laminate film 14 can be determined appropriately, taking into account required optical properties such as visible light transmittance (i.e., transparency), solar-radiation shielding property, and thermal insulation property and electrical properties such as overall surface resistance of the film. The number of the layers in the transparent multilayer 14 is preferably within a range of two to ten, from the viewpoint of the materials, thicknesses, production costs of the layers. The number is more preferably an odd number, and is even more preferably three, five, or seven, from the viewpoint of the optical properties of the transparent multilayer 14.

The pressure-sensitive adhesive layer 16 acts to bond the polyolefin layer 18 to the transparent multilayer 14. Examples of the pressure-sensitive adhesive include acrylic, silicone, and urethane based pressure-sensitive adhesives. If a
(non-pressure-sensitive) adhesive is used instead of the pressure-sensitive adhesive, the metal oxide layers could be easily peeled off by a shrinkage stress because the adhesive has large shrinkage. However, when the pressure-sensitive adhesive is used, the pressure -sensitive adhesive has so small shrinkage that peeling of the metal oxide layers is suppressed. Since the transparent laminate film 10 has a cut surface at an edge thereof, edges of the metal layers are exposed. Thus, the edges of the metal layers could be subjected to salt-water corrosion. However, since peeling of the metal oxide layer on the pressure-sensitive adhesive layer 16 is suppressed, intrusion of salty water from the edge of the film 10 into the inside is suppressed, whereby progress of the salt-water corrosion inside the film 10 is suppressed.

The thickness of the pressure-sensitive adhesive layer 16 is preferably 5.0 µm or smaller, and more preferably 2.0 µm or smaller, to provide an excellent thermal insulation property (i.e., low thermal transmittance). On the other hand, the thickness is preferably 1.0 µm or higher, and more preferably 1.2 µm or larger, to provide excellent adhesion to the polyolefin layer 18.

Having high flexibility, the polyolefin layer 18 acts to relax stress applied by a squeegee during attachment of the transparent laminate film 10. Further, the polyolefin layer 18 acts to suppress intrusion of salt water from the surface of the transparent multilayer 14 to the metal layers in the multilayer 14, covering the surface of the multilayer 14. Any polyolefin material may be used to form the polyolefin layer 18; however, a polypropylene is preferable because of high transparency thereof. A biaxially oriented polypropylene (OPP) is especially preferable.

The thickness of the polyolefin layer 18 is preferably 30 µm or smaller, and more preferably 24 µm or smaller, to provide an excellent thermal insulation property (i.e. , low thermal transmittance). On the other hand, the thickness is preferably 10 µm or larger, and more preferably 13 µm or larger, to provide an excellent effect of relaxing the stress applied by the squeegee during the attachment of the film 10.

The cured resin layer 20 acts to increase scratch resistance of the transparent laminate film 10. The cured resin layer 20 is provided as an outermost layer. Examples of the cured resin to form the cured resin layer 20 include acrylic, epoxy, and urethane resins. More specific examples include acrylic, acrylic urethane, silicone acrylic, and acrylic melamine resins.

The thickness of the cured resin layer 20 is preferably 2.0 µm or smaller, and more preferably 1.6 µm or smaller, to provide an excellent thermal insulation property (i.e., low thermal transmittance). On the other hand, the thickness is preferably 1.0 µm or larger, and more preferably 1.3 µm or larger, to provide excellent scratch resistance.

In the transparent laminate film 10, the cured resin layer 20 is provided as the outermost layer, and the polyolefin layer 18 is placed between the transparent multilayer 14 and the cured resin layer 20. Having the layers 18, 20, the film 10 has both excellent scratch resistance and an excellent effect of relaxing the stress applied by the squeegee during the attachment of the film 10. If the film 10 has only either of the layers 18, 20, or if at least one of the layers 18, 20 is placed in different positions in the film 10, at least one of the two excellent properties could not be achieved.

The polyolefin layer 18 preferably has a wet tension of 35 mN/m or higher on the surface 18a thereof in contact with the pressure-sensitive adhesive layer 16. The wet tension is more preferably 41 mN/m or higher. When the wet tension on the surface 18a is increased, increased adhesion is provided between the polyolefin layer 18 and the pressure-sensitive adhesive layer 16, whereby peeling of the pressure-sensitive adhesive layer 16 from the polyolefin layer 18 is suppressed. The wet tension may be increased by corona treatment on the surface 18a of the polyolefin layer 18. Thus, the surface 18a of the polyolefin layer 18 in contact with the pressure-sensitive adhesive layer 16 is preferably corona treated to increase the wet tension effectively. The wet tension may be measured in accordance with JIS K6768.

The polyolefin layer 18 preferably has a wet tension of 43 mN/m or higher on the surface 18b thereof in contact with the cured resin layer 20. The wet tension is more preferably 46 mN/m or higher. When the wet tension on the surface 18b is increased, increased adhesion is provided between the polyolefin layer 18 and the cured resin layer 20, whereby peeling of the cured resin layer 20 is suppressed. The wet tension on the surface 18b may be increased by formation of the easy-adhesion layer 22 on the surface 18b of the polyolefin layer 18. In the present case, the easy-adhesion layer 22 serves as a layer whose surface is in contact with the cured resin layer 20. Thus, the transparent laminate film 10 preferably has the easy-adhesion layer 22 on the surface 18b of the polyolefin layer facing the cured resin layer 20.

The easy-adhesion layer 22 consists, for example, of a modified polyolefin layer or acrylic resin layer that has polar groups on a surface there of in contact with the cured resin layer 20. The polar groups, for example, contain heteroatoms such as N, O, and S atoms. Examples of the modified polyolefin include polar group-containing polypropylene copolymer, polyethylene, polyisoprene, and polyisobutylene.

The adhesive force between the polyolefin layer 18 and the pressure-sensitive adhesive layer 16 is preferably 3 N/25 mm or larger, and more preferably 7 N/25 mm or larger. The adhesive force between the layers 16, 18 is measured in accordance with JIS A5759. The adhesive force between the polyolefin layer 18 and the cured resin layer 20 corresponds preferably to 20 or more cells, and more preferably to 25 or more cells, when evaluated in accordance with JIS K5600-5-6.

The transparent laminate film 10 may be produced as follows: first, the transparent multilayer 14 is prepared by sequentially stacking the component layers on the transparent laminate film 12 to have an appropriate laminate structure with the use of appropriate film formation methods. The prepared transparent multilayer 14 is subjected to heat treatment such as post-oxidation, as necessary. Then, the pressure-sensitive adhesive layer 16 is formed on the surface of the transparent multilayer 14 by applying the pressure-sensitive adhesive onto the surface. Then, the polyolefin layer 18 is formed by placing a polyolefin film having the easy-adhesion layer 22 on one surface thereof and by applying pressure on the film. Finally, the cured resin layer 20 is formed by applying a curable resin on the surface of the easy-adhesion layer 22 on the polyolefin layer 18 and by curing the film of the curable resin. Thus, the transparent laminate film 10 is obtained.

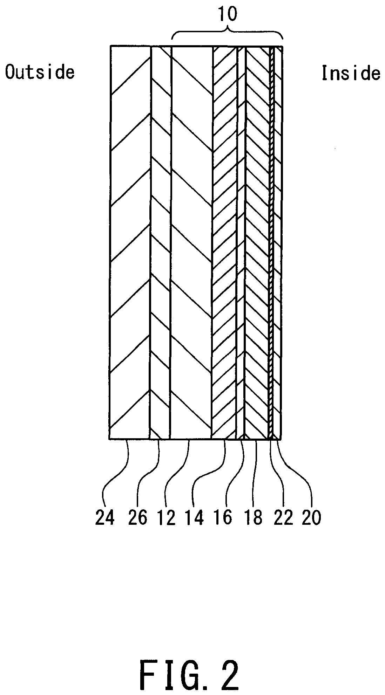

The transparent laminate film 10 is suitably attached on a window glass of an architecture such as a building and a house and a vehicle such as an automobile. Figure 2 shows the transparent laminate film 10 when attached on a window glass 24. As illustrated in Fig. 2, the transparent laminate film 10 is attached on the surface of the window glass 24 inside the room, with the side thereof on which the transparent multilayer 14 is formed facing outside the room and the side thereof on which the transparent multilayer 14 is not formed facing outside the room. The transparent laminate film 10 may be attached on the window glass 24 with the use of an adhesive 16.

The transparent laminate film 10 reflects solar radiation coming from outside the room by the multilayer 14, and thus has a good solar-radiation shielding property. Further, the transparent multilayer 14 improves the effect of heating and cooling in the room. Thus, the transparent laminate film 10 has an excellent thermal insulation property. The cured resin layer 20 as the outermost layer provides high scratch resistance. The polyolefin layer 18, placed between the cured resin layer 20 and the transparent multilayer 14, relaxes the stress applied by the squeegee during the attachment of the film 10. The pressure-sensitive adhesive layer 16 ensures adhesion of the polyolefin layer 18. Further, the pressure-sensitive adhesive layer 16 suppresses salt-water corrosion at the edge of the film 10 while the polyolefin layer 18 suppresses salt-water corrosion on the surface of the film 10. Thus, deterioration of the film 10 by salt-water corrosion is suppressed.

Next, a description of a transparent laminate film according to another preferred embodiment of the present invention will be provided.

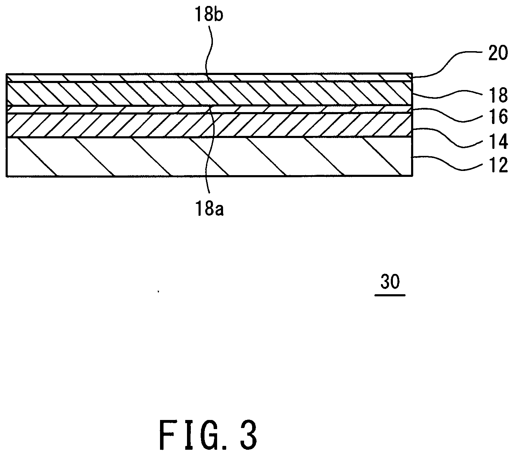

Figure 3 is a cross-sectional view showing a transparent laminate film according to another preferred embodiment of the present invention. As illustrated in Fig. 3, a transparent laminate film 30 contains a transparent polymer film 12, a transparent multilayer 14, a pressure-sensitive adhesive layer 16, a polyolefin layer 18, and a cured resin layer 20. The transparent multilayer 14 is placed on a surface of the transparent polymer film 12. The pressure-sensitive adhesive layer 16 is placed in contact with the transparent multilayer 14 while the polyolefin layer 18 is placed in contact with the pressure-sensitive adhesive layer 16. No easy-adhesion layer is formed on the surface 18b of the polyolefin layer 18 facing the cured resin layer 20, and the cured resin layer 20 is placed in contact with the polyolefin layer 18.

When compared with the transparent laminate film 10, the transparent laminate film 30 does not have an easy-adhesion layer on the surface 18b of the polyolefin layer 18 facing the cured resin layer 20. In the present case, the surface 18b of the polyolefin layer 18 facing the cured resin layer 20 serves as a surface that is in contact with the cured resin layer 20. The surface 18b in contact with the cured resin layer 20 has a wet tension of 43 mN/m or larger. The wet tension is more preferably 46 mN/m or larger. The wet tension may be increased by corona treatment on the surface 18b of the polyolefin layer 18. Thus, the surface 18b of the polyolefin layer 18 in contact with the cured resin layer 20 is preferably corona treated to increase the wet tension.

Next, descriptions of the metal oxide layer, metal layer, and barrier layer contained in the transparent multilayer 14 will be provided.

Examples of the metal oxide constituting the metal oxide layer in the transparent multilayer 14 include oxides of titanium, zinc, indium, tin, indium-tin, magnesium, aluminum, zirconium, niobium, and cerium. These species may be contained in the metal oxide layer singly or in combination. Further, a composite oxide that comprises two or more of these metal oxides may also be applicable. In particular, from the viewpoint of having a relatively high refractive index with respect to visible light, examples of preferable metal oxides include oxides of titanium, indium-tin, zinc, and tin.

The metal oxide layer may be formed by a gas phase method or a liquid phase method. The liquid phase method, in contrast to the gas phase method, does not require evacuation or use of a high electric power. Thus, the liquid phase method is cost-effective, and is also excellent in productivity. Therefore, the liquid phase method is a preferable method. As the liquid phase method, from the viewpoint of effectively leaving a remaining organic component, a sol-gel method may be preferably used.

Though the metal oxide layer is composed mainly of the above-mentioned metal oxide, an organic component may also be contained in addition to the metal oxide. This is because flexibility of the transparent laminate film is improved when the metal layer contains the organic component. Specific examples of the organic component of this kind include a component originating from a formation material of the metal oxide layer such as a component originating from a starting material for the sol-gel method.

More specific examples of the organic component include organometallic compounds (including decomposed materials thereof) such as alkoxides, acylates, and chelates of the metals constituting the above-described metal oxides; and various kinds of additives such as (below-described) organic compounds that form ultraviolet absorbing chelates by reacting with the organometallic compounds. These compounds may be contained in the metal oxide layer singly or in combination.

From the viewpoint of effectively imparting flexibility to the metal oxide layer, the lower limit of the content of the organic component in the metal oxide layer is preferably 3 mass%, more preferably 5 mass%, and even more preferably 7 mass%. On the other hand, from the viewpoint of effectively ensuring a high refractive index and solvent resistance of the metal oxide layer, the upper limit of the content is preferably 30 mass%, more preferably 25 mass%, and even more preferably 20 mass%. The content of the organic component can be examined with x-ray photoelectron spectroscopy (XPS), for example. The type of the organic component can be examined with infrared spectroscopy (IR) (infrared absorption analysis), for example.

In a specific example of the sol-gel method, a coating liquid containing an organometallic compound of the metal that constitutes the metal oxide is applied in a form of a thin film, and is dried as necessary, to form a precursor layer of the metal oxide layer. Then the organometallic compound contained in this precursor layer is caused to undergo a hydrolysis-condensation reaction to synthesize an oxide of the metal constituting the organometallic compound. By this method, the metal oxide layer containing the metal oxide, as the main component, and the organic component is formed. In the following, the method is explained in detail.

The coating liquid may be prepared by dissolving the organometallic compound in an appropriate solvent. Specific examples of the organometallic compound include organometallic compounds of metals such as titanium, zinc, indium, tin, magnesium, aluminum, zirconium, niobium, cerium, silicon, hafnium, and lead. These compounds may be contained in the liquid singly or in combination.

Specific examples of the organometallic compound include alkoxides, acylates, and chelates of the above-described metals. From the viewpoint of stability in the air, the chelates of the metals are preferable.

As the organometallic compound, an organic compound of a metal that forms a metal oxide having a high refractive index is preferably used in particular. Examples of such an organometallic compound include organotitanium compounds.

Specific examples of the organotitanium compounds include titanium alkoxides having an M-O-R bond (where R denotes an alkyl group and M denotes a titanium atom) such as tetra-n-butoxy titanium, tetraethoxy titanium, tetra-i-propoxy titanium, and tetramethoxy titanium; titanium a cylates having an M-O-CO-R bond (where R denotes an alkyl group and M denotes a titanium atom) such as isopropoxy titanium stearate; and titanium chelates such as titanium diisopropoxy bis(acetylacetonate), titanium dihydroxy bis(lactate), titanium diisopropoxy bis(triethanolaminato), and titanium diisopropoxy bis(ethylacetoacetate). One kind of these compounds may be used singly, or two or more kinds may be mixed. Further, these compounds may be monomers or polymers.

From the viewpoint of uniformity of the thickness of a coating film and the viewpoint of the thickness of a film obtained by one coating, a content of the organometallic compound in the coating liquid is preferably within a range of 1-20 mass%, more preferably within a range of 3-15 mass%, and even more preferably within a range of 5-10 mass%.

Specific examples of the solvent in which the organometallic compound is dissolved include alcohols such as methanol, ethanol, propanol, butanol, heptanol, and isopropyl alcohol; organic acid esters such as ethyl acetate;ketonessuchasacetonitrile,acetone,and methyl ethyl ketone; cyclo-ethers such as tetrahydrofuran and dioxane; acid amides such as formamide and N,N-dimethylformamide; hydrocarbons such as hexane; and aromatics such as toluene. One of these solvents may be used singly or two or more may be mixed.

From the viewpoint of uniformity of the thickness of a coating film and the viewpoint of the thickness of a film obtained by one coating, an amount of the solvent is preferably within a range of 5-100 times, more preferably within a range of 7-30 times, and even more preferably within a range of 10-20 times of the mass of the organometallic compound in a solid state.

When the amount of the solvent is more than 100 times, there is a tendency that the film thickness achieved by one coating is small, and multiple times of coating is necessary in order to achieve a desired film thickness. On the other hand, when the amount of the solvent is less than 5 times, there is a tendency that the film thickness is too large and the hydrolysis-condensation reaction of the organometallic compound is difficult to proceed sufficiently. Therefore, the amount of the solvent is preferably selected taking these factors into consideration.

The coating liquid may be prepared, for example, by stirring and mixing the organometallic compound weighed so as to achieve a predetermined ratio, an appropriate amount of the solvent, and other ingredients added as needed, for a predetermined period of time using a stirring means such as a stirrer. In this case, the mixing of the components may be conducted at one time or may be divided into multiple times.

From the viewpoint of facilitating a uniform coating, examples of a preferable method for coating with the above-mentioned coating liquid include various wet coating methods such as a micro-gravure method, a gravure method, a reverse roll coating method, a die coating method, a knife coatingmethod, a dip coatingmethod, a spin coating method and a bar coating method. These methods may be selected appropriately, and may be used singly or in combination.

When an applied coating liquid is dried, a conventional drying equipment may be used. Specific examples of drying conditions include a temperature range of 80-120°C and a drying period of 0.5-5 minutes.

Specific examples of the means for causing the organometallic compound in the precursor layer to undergo a hydrolysis-condensation reaction include application of optical energy such as ultraviolet and x rays, application of electron beam, and heating. These may be used singly or in combination. Among them, the application of optical energy, or in particular, ultraviolet irradiation may be preferably used. This is because, in the case of application of the optical energy, the metal oxide can be produced at a lower temperature and in a shorter period, and a smaller amount of thermal load such as thermal degradation is applied to the transparent polymer film, than in the case of the other methods (and because, particularly in the case of ultraviolet irradiation, there is an advantage that only a relatively simple equipment is required). Further, there is an advantage that it is likely for the organometallic compound (including decomposed materials thereof) to remain as the organic component in the case of the application of the optical energy.

When the curing process in the sol-gel method is carried out with the application of optical energy, the metal oxide layer produced may be coarser than metal oxide layers produced by other methods such as a sputtering method. Thus, when the transparent laminate film is attached with water onto a window glass of an architecture, water left in an interstice between the window glass and the film can easily escape from the interstice. Thus, the transparent laminate film has an excellent workability in the attachment thereof with water.

Specific examples of an ultraviolet irradiation equipment include a mercury lamp, a xenon lamp, a deuterium lamp, an excimer lamp, and a metal halide lamp. These may be used singly or in combination.

Intensity of the applied optical energy can be adjusted variously taking into consideration, for example, the type of the organometallic compound mainly composing the precursor layer and the thickness of the precursor layer. When the intensity of the applied optical energy is too small, a high refractive index of the metal oxide layer is hard to be achieved. On the other hand, when the intensity is too large, the transparent polymer film may be deformed due to heat generated during application of the optical energy. Therefore, it is preferred to pay attention to these factors.

In the case where ultraviolet rays are applied as the optical energy, the intensity of the rays measured within a wavelength range of 300-390 nm is preferably within a range of 300-8000 mJ/cm², and more preferably within a range of 500-5000 mJ/cm² from the viewpoints of the refractive index of the metal oxide layer and damage received by the transparent polymer film.

When the optical energy is applied as a means for causing the organometallic compound in the precursor layer to undergo a hydrolysis-condensation reaction, it is preferable that an additive such as an organic compound that reacts with the organometallic compound to form a light absorbing (for example, ultraviolet absorbing) chelate is added to the above described coating liquid. When the additive is added to the coating liquid, which is a starting solution, a light absorbing chelate formed in advance is irradiated with the optical energy. Therefore, a metal oxide layer having a high refractive index can easily be formed at a relatively low temperature.

Specific examples of the above-described additive include additives such as β-diketones, alkoxy alcohols, and alkanolamines. More specific examples of the β-diketones include acetylacetone, benzoylacetone, ethyl acetoacetate, methyl acetoacetate, and diethyl malonate. Examples of the alkoxy alcohols include 2-methoxyethanol, 2-ethoxyethanol, and
2-methoxy-2-propanol. Examples of the alkanolamines include monoethanolamine, diethanolamine, and triethanolamine. One of these may be used singly or two or more may be mixed.

Among these compounds, the β-diketones are particularly preferable. Among the β-diketones, the acetylacetone may be most preferably used.

From the viewpoint of effectively increasing the refractive index and the viewpoint of stability of the additive in a coating film, a mixing ratio of the above additive is preferably within a range of 0.1-2 moles, and more preferably within a range of 0.5-1.5 moles, with respect to 1 mole of metal atoms in the organometallic compound.

The thickness of the metal oxide layer may be adjusted by considering the solar-radiation shielding property, visibility, and reflected color of the layer. From the viewpoints of effectively inhibiting the reflected color from being reddish or yellowish and obtaining high transparency, the lower limit of the thickness of the metal oxide layer is preferably 10 nm, more preferably 15 nm or more, and even more preferably 20 nm or more. On the other hand, from the viewpoints of effectively inhibiting the reflected color from being greenish and obtaining high transparency, the upper limit of the thickness of the metal oxide layer is preferably 90 nm, more preferably 85 nm, and even more preferably 80 nm.

Examples of the metals constituting the metal layer include metals such as silver, gold, platinum, copper, aluminum, chromium, titanium, zinc, tin, nickel, cobalt, niobium, tantalum, tungsten, zirconium, lead, palladium, and indium; and alloys of these metals. These species may be used singly or in combination.

From the viewpoint of excellence in visible light transparency, heat ray reflectivity, and electrical conductivity in the multilayer, the metal constituting the metal layer is preferably silver or a silver alloy. From the viewpoint of improving durability with respect to an environment such as heat, light, and moisture, the metal is more preferably a silver alloy containing silver, as a main component, and at least one or more metal elements such as copper, bismuth, gold, palladium, platinum, and titanium. It is even more preferable that the metal is a copper-containing silver alloy (Ag-Cu alloy), a bismuth-containing silver alloy (Ag-Bi alloy), or a titanium-containing silver alloy (Ag-Ti alloy). This is because they have advantages such as large effects of inhibiting diffusion of silver and cost efficiencies.

When the copper-containing silver alloy is used, other elements or unavoidable impurities may also be contained in the alloy in addition to silver and copper as far as they do not adversely affect, for example, the effect of inhibiting aggregation and diffusion of silver in the Ag-Cu alloy.

Specific examples of the above-mentioned other elements include elements soluble in Ag such as Mg, Pd, Pt, Au, Zn, Al, Ga, In, Sn, Sb, Li, Cd, Hg, and As; elements that can be precipitated singly in an Ag-Cu alloy such as Be, Ru, Rh, Os, Ir, Bi, Ge, V, Nb, Ta, Cr, Mo, W, Mn, Re, Fe, Co, Ni, Si, Tl, and Pb; elements that can precipitate intermetallic compounds with Ag such as Y, La, Ce, Nd, Sm, Gd, Tb, Dy, Ti, Zr, Hf, Na, Ca, Sr, Ba, Sc, Pr, Eu, Ho, Er, Tm, Yb, Lu, S, Se, and Te. These elements may be contained in the alloy singly or in combination.

When the copper-containing silver alloy is used, from the viewpoint of benefiting an effect of addition of copper, the lower limit of the copper content is preferably 1 atom%, more preferably 2 atom%, and even more preferably 3 atom%. On the other hand, from the viewpoint of effectively ensuring high transparency of the metal layer and the viewpoint of manufacturability such as easiness in preparation of a sputtering target, the upper limit of the copper content is preferably 20 atom%, more preferably 10 atom%, and even more preferably 5 atom%.

When the bismuth-containing silver alloy is used, other elements or unavoidable impurities may also be contained in the alloy in addition to silver and bismuth as far as they do not adversely affect, for example, the effect of inhibiting aggregation and diffusion of silver.

Specific examples of the above-mentioned other elements include elements soluble in Ag such as Mg, Pd, Pt, Au, Zn, Al, Ga, In, Sn, Sb, Li, Cd, Hg, and As; elements that can be precipitated singly in an Ag-Bi alloy such as Be, Ru, Rh, Os, Ir, Cu, Ge, V, Nb, Ta, Cr, Mo, W, Mn, Re, Fe, Co, Ni, Si, Tl, and Pb; and elements that can precipitate intermetallic compounds with Ag such as Y, La, Ce, Nd, Sm, Gd, Tb, Dy, Ti, Zr, Hf, Na, Ca, Sr, Ba, Sc, Pr, Eu, Ho, Er, Tm, Yb, Lu, S, Se, and Te. These elements may be contained in the alloy singly or in combination.

When the bismuth-containing silver alloy is used, from the viewpoint of benefiting an effect of addition of bismuth, the lower limit of the bismuth content is preferably 0.01 atom%, more preferably 0.05 atom%, and even more preferably 0.1 atom%. On the other hand, from the viewpoint of manufacturability such as easiness in preparation of a sputtering target, the upper limit of the bismuth content is preferably 5 atom%, more preferably 2 atom%, and even more preferably 1 atom%.

When the titanium-containing silver alloy is used, other elements or unavoidable impurities may also be contained in the alloy in addition to silver and titanium as far as they do not adversely affect, for example, the effect of inhibiting aggregation and diffusion of silver.

Specific examples of the above-mentioned other elements include elements soluble in Ag such as Mg, Pd, Pt, Au, Zn, Al, Ga, In, Sn, Sb, Li, Cd, Hg, and As; elements that can be precipitated singly in an Ag-Ti alloy such as Be, Ru, Rh, Os, Ir, Cu, Ge, V, Nb, Ta, Cr, Mo, W, Mn, Re, Fe, Co, Ni, Si, Tl, Pb, and Bi; and elements that can precipitate intermetallic compounds with Ag such as Y, La, Ce, Nd, Sm, Gd, Tb, Dy, Zr, Hf, Na, Ca, Sr, Ba, Sc, Pr, Eu, Ho, Er, Tm, Yb, Lu, S, Se, and Te. These elements may be contained in the alloy singly or in combination.

When the titanium-containing silver alloy is used, from the viewpoint of benefiting an effect of addition of titanium, the lower limit of the titanium content is preferably 0.01 atom%, more preferably 0.05 atom%, and even more preferably 0.1 atom%. On the other hand, from the viewpoint of effectively forming a complete solid solution on formation of the layer, the upper limit of the content of titanium is preferably 2 atom%, more preferably 1.75 atom%, and even more preferably 1.5 atom%.

Content ratio of the additive element such as copper, bismuth, and titanium, may be measured with ICP analysis. The metal (including alloy) constituting the metal layer may be partially oxidized.

From the viewpoints of stability and heat ray reflectivity of the metal layer, the lower limit of the thickness of the metal layer is preferably 3 nm, more preferably 5 nm, and even more preferably 7 nm. On the other hand, from the viewpoints of visible light transparency and economic efficiency, the upper limit of the thickness is preferably 30 nm, more preferably 20 nm, and even more preferably 15 nm.

Specific examples of a method for forming the metal layer include physical vapor deposition (PVD) methods such as a vacuum deposition method, a sputtering method, an ion plating method, an MBE method, and a laser ablation method; and chemical vapor deposition (CVD) methods such as a thermal CVD method and a plasma CVD method. These methods may be used singly or in combination for formation of the metal layer.

Among these methods, from the viewpoints of obtaining a dense layer and controlling the layer thickness relatively easily, the sputtering method such as a DC magnetron sputtering method and an RF magnetron sputtering method may be preferably used.

The metal layer may be oxidized, for example, by the post-oxidization, which will be described later, to the extent that functions of the metal layer are not impaired.

The barrier layer which is attached to the metal layer mainly acts as a barrier inhibiting diffusion of an element constituting the metal layer into the metal oxide layer. Further, by intervening between the metal oxide layer and the metal layer, the barrier layer also contributes to improvement of adhesion between the metal oxide layer and the metal layer. As far as being able to inhibit the diffusion, the barrier layer may have a discontinuous structure such as an island structure.

Specific examples of a metal oxide constituting the barrier layer include oxides of titanium, zinc, indium, tin, indium-tin, magnesium, aluminum, zirconium, niobium, and cerium. These metal oxides may be contained in the barrier layer singly or in combination. Further, these metal oxides may also constitute a composite oxide, which comprises two or more kinds of metal oxides. Besides the metal oxides, the barrier layer may also contain unavoidable impurities.

From the viewpoint of having an excellent effect of inhibiting diffusion of metal atoms constituting the metal layer and excellent adhesion, the barrier layer preferably is composed mainly of an oxide of a metal contained in the metal oxide layer.

Tobemore specific, for example, when a TiO₂ layer is selected as the metal oxide layer, the barrier layer is preferably a titanium oxide layer composed mainly of an oxide of Ti, which is the metal contained in the TiO₂ layer.

When the barrier layer is a titanium oxide layer, the barrier layer may be a layer formed originally as a titanium oxide layer, a layer formed by post-oxidization of a metallic Ti layer, or a layer formed by post-oxidization of a partially oxidized titanium layer.

Though the barrier layer and the metal oxide layer are both composed mainly of metal oxides, the barrier layer is configured to have a smaller thickness than the metal oxide layer. This is because the diffusion of the metal constituting the metal layer occurs at an atomic level so that the necessity is low for the barrier layer to have a thickness as large as required to ensure a sufficient refractive index. Further, a thinner layer may be formed at a lower cost, and thus can contribute to reduction of the production cost of the transparent laminate film.

From the viewpoint of effectively ensuring a barrier property, the lower limit of the thickness of the barrier layer is preferably 1 nm, more preferably 1. 5 nm, and even more preferably 2 nm. On the other hand, from the viewpoint of economic efficiency, the upper limit of the thickness is preferably 15 nm, more preferably 10 nm, and even more preferably 8 nm.

When the barrier layer is composed mainly of the titanium oxide, an atomic molar ratio of titanium with respect to oxygen Ti/O in the titanium oxide has, from the viewpoint of the barrier property, a lower limit of preferably 1.0/4.0, more preferably 1.0/3.8, even more preferably 1.0/3.5, even more preferably 1.0/3.0, and most preferably 1.0/2.8.

When the barrier layer is composed mainly of the titanium oxide, the atomic molar ratio of titanium with respect to oxygen Ti/O in the titanium oxide has, from the viewpoint of visible light transparency, an upper limit of preferably 1.0/0.5, more preferably 1.0/0.7, even more preferably 1.0/1.0, even more preferably 1.0/1.2, and most preferably 1.0/1.5.

The Ti/O ratio may be estimated from the composition of the barrier layer. As a composition analysis method for the barrier layer, from the viewpoint of an ability to analyze the composition of an extremely thin layer relatively accurately, energy dispersive fluorescent x-ray analysis (EDX) may be preferably used.

In a specific composition analysis method, first, by using an ultrathin sectioning method (such as microtome method), a test specimen is prepared having a thickness of 100 nm or less in a cross-sectional direction of the multilayer containing the barrier layer to be analyzed. Next, the laminated layer structure and location of the barrier layer therein are examined by observation of the specimen with a transmission electron microscope (TEM) from the cross-sectional direction. Next, an electron beam is emitted from an electron gun of an EDX equipment and is made incident to a vicinity of the thickness-direction center of the layer to be analyzed. Electrons incident from a surface of the test specimen penetrate into a certain depth and generate various electron beams and x rays. By detecting and analyzing emitted characteristic x rays, constituent elements of the layer are analyzed.

From the viewpoints of forming a dense layer and forming a layer having a uniform thickness of about several nanometers to several tens of nanometers, a gas phase method can be preferably used for formation of the barrier layer.

Specific examples of the gas phase method include physical vapor deposition (PVD) methods such as a vacuum deposition method, a sputtering method, an ion plating method, an MBE method, and a laser ablation method; and chemical vapor deposition (CVD) methods such as a thermal CVD method, and a plasma CVD method. Among the gas phase methods, the sputtering method such as a DC magnetron sputtering method, and an RF magnetron sputtering method may be preferably used, since the method provides higher adhesion at an interface between layers and easier control of the film thickness than the other methods such as the vacuum deposition method.

Each barrier layer contained in the multilayer may be formed by one of the gas phase methods singly or by two or more in combination.

The barrier layer may be formed with the above described gas phase methods originally as a metal oxide layer. Alternatively, the barrier layer may be formed by first forming a metal layer or a partially oxidized metal layer and then post-oxidizing the metal layer or the partially oxidized metal layer. A partially oxidized metal layer is a metal oxide layer that can be further oxidized.

In the case where the barrier layer is formed originally as a metal oxide layer, a thin layer may be formed, for example, during a reaction between metal and oxygen as a reactive gas, which is provided as a mixture with an inert gas such as argon and neon as a sputtering gas (i.e. , by a reactive sputtering method). In the case where, for example, a titanium oxide layer having the above mentioned Ti/O ratio is formed by the reactive sputtering method, an optimal oxygen concentration in the atmosphere (volume ratio of the oxygen-containing gas to the inert gas) may be appropriately selected by considering the above described thickness range.

In the case where a metal layer or a partially oxidized metal layer is formed and then post-oxidized, specifically, the above described multilayer may be formed on the transparent polymer film 12 and thereafter the metal layer or partially oxidized metal layer in the multilayer may be post-oxidized. For the formation of the metal layer, for example, a sputtering method may be used. For the formation of the partially oxidized metal layer, for example, the above-described reactive sputtering method may be used.

Examples of the post-oxidation method include heat treatment, pressure treatment, chemical treatment, and natural oxidation. Among these post-oxidation methods, from the viewpoint of being a relatively simple and reliable post-oxidation process, the heat treatment is preferable. Examples of the heat treatment include a method in which the transparent polymer film having the above-described multilayer is placed in a heating atmosphere such as in a heating furnace, a
warm-water-immersion method, a microwave heating method and a method in which the metal layer or the partially oxidized metal layer in the multilayer are electrically heated. These methods may be performed singly or in combination.

As specific heating conditions during the heat treatment in a heating atmosphere, for example, a heating temperature is preferably within a range of 30-60°C, more preferably within a range of 32-57°C, and even more preferably within a range of 35-55°C, and a heating time of preferably 5 days or longer, more preferably 10 days or longer, and even more preferably 15 days or longer. This is because the above-mentioned heating conditions provide good post-oxidation effect, and inhibit thermal deformation and fusion bonding of the transparent polymer film 12.

The heat treatment is conducted preferably in an atmosphere containing oxygen or moisture such as in the air, a high oxygen atmosphere, and a high humidity atmosphere. From the viewpoints of manufacturability and cost reduction, the heat treatment is conducted more preferably in the air.

In a case where the above-described post-oxidized layer is contained in the multilayer, moisture and oxygen contained in the metal oxide layer are consumed during the post-oxidation. Therefore, even when exposed to sunlight, the metal oxide layer is unlikely to undergo a chemical reaction. As a specific example, in the case where a metal oxide layer is formed by a sol-gel method, moisture and oxygen contained in the metal oxide layer are consumed during post-oxidation, and thus it is unlikely for a sol-gel curing reaction to be caused by sunlight between a starting material of the sol-gel method (e.g., a metal alkoxide) remaining in the metal oxide layer and moisture (e.g., adsorbed water) or oxygen. Therefore, an internal stress caused by a volume change due to curing shrinkage can be relaxed, and interfacial peeling in the multilayer is likely to be inhibited, which results in improved durability against sunlight.

### EXAMPLE

A description of the present invention will now be specifically provided with reference to Examples.

### 1. Investigation of Adhesion between Polyolef in Layer and Pressure-sensitive Adhesive Layer

### (Experimental Examples 1 to 6)

OPP films described below were used for Experimental Examples. The films were corona treated, as necessary, to change the wet tensions thereof.
- OPP <1>: "P2111", manufactured by TOYOBO CO., LTD.; thickness: 20 µm; inside surface: having an easy adhesive layer; outside surface: non-corona treated
- OPP <2>: "FOR-2", manufactured by FUTAMURA CHEMICAL CO., LTD.; thickness: 15 µm; inside surface: corona treated; outside surface: corona treated
- OPP <3>: "EM-501", manufactured by OJI SPECIALTY PAPER CO., LTD.; thickness: 15 µm; inside surface: corona treated; outside surface: non-corona treated
- OPP <4>: "S-648", manufactured by TORAY INDUSTRIES INC.; thickness: 20 µm; inside surface: corona treated; outside surface: having an easy-adhesion layer

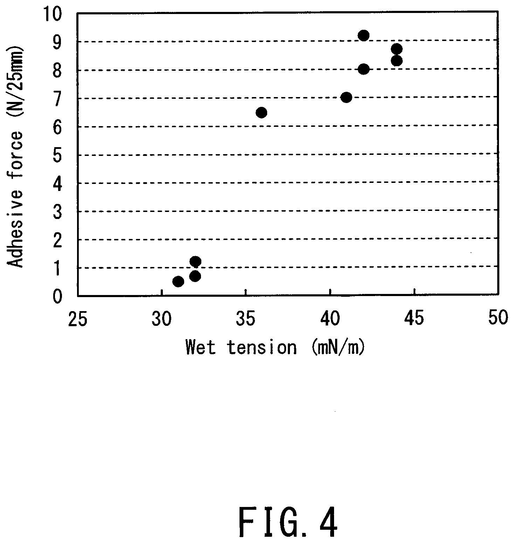

Wet tensions of the surfaces of the OPP films were measured. Then, a pressure sensitive adhesive ("base compound: BPS5260, curing agent: BHS8515", manufactured by TOYO INK CO., LTD.) was applied onto the inside or outside surfaces of the OPP films to have a thickness of 1.5 µm, and then was made adhere to the OPP films by application of pressure. Then, the adhesive forces between the OPP films (i.e., polyolefin layers) and the pressure-sensitive adhesive layers were measured. The results are presented in Table 1 and Fig. 4.

### (Measurement of Wet Tension)

Wet tensions of the OPP films were measured in accordance with JIS K6768. To be specific, the surfaces of the OPP films were wetted with a prescribed wetting agent with the use of a cotton swab over areas of 6 cm² or larger, and then the states of the wetting agent were examined by visual observation in two seconds (N=3). The surfaces that repelled the wetting agent were interpreted as having lower tensions than the wetting agent. The measurement was carried out for a wet tension of 32 mN/m or higher.

### (Measurement of Adhesive Force)

Adhesive forces of the samples were measured in accordance with JIS A5759. To be specific, the OPP films with the pressure-sensitive adhesive layers were each attached onto a plate glass, and were left for 24 hours or longer. Then, a 180° peeling test was carried out. In the 180° peeling test, the films were peeled off at a tensile rate of 300 mm/min. Loads were measured at four points at intervals of 20 mm on each of the samples. An average of the loads measured at the four points was regarded as the adhesive force of the sample. The measurement was carried out for three sample pieces (i.e., pieces of the OPP film with the pressure-sensitive adhesive layer), and an average of the adhesive forces obtained for the three sample pieces was finally adopted as the adhesive force.

**[Table 1]**

| Example | OPP | | Wet tension (mN/m) | Adhesive force (N/25 mm) |
|---|---|---|---|---|
| 1 | OPP <1> | Outside surface | 32 | 0.7 |
| 1 | | (non-corona treated) | 32 | 1.2 |
| 2 | | Outside surface | 44 | 8.3 |
| 2 | | (additionally corona treated) | 44 | 8.7 |
| 3 | OPP <2> | Inside surface | 41 | 7.0 |
| | | (corona treated) | | |
| 4 | | Inside surface | 42 | 8.0 |
| 4 | | (additionally corona treated) | 42 | 9.2 |
| 5 | OPP <3> | Inside surface | 36 | 6.5 |
| | | (corona treated) | | |
| 6 | | Outside surface | 31 | 0.5 |
| | | (non-corona treated) | | |

Table 1 indicates that as the wet tension on the surface of the OPP film (i.e., polyolefin layer) is increased, the adhesive force between the polyolefin layer and the pressure-sensitive adhesive layer is increased. Thus, increasing the wet tension on the surface of the OPP film (i.e., polyolefin layer) is effective in increasing the adhesive force between the polyolefin layer and the pressure-sensitive adhesive layer. Further, when the wet tension on the surface of the OPP film (i.e., polyolefin layer) is 35 mN/m or higher, the adhesive force between the polyolefin layer and the pressure-sensitive adhesive layer can be 3 N/25 mm or higher.

### 2. Investigation of Adhesion between Polyolefin Layer and Cured Resin Layer

### (Experimental Examples 7 to 16)

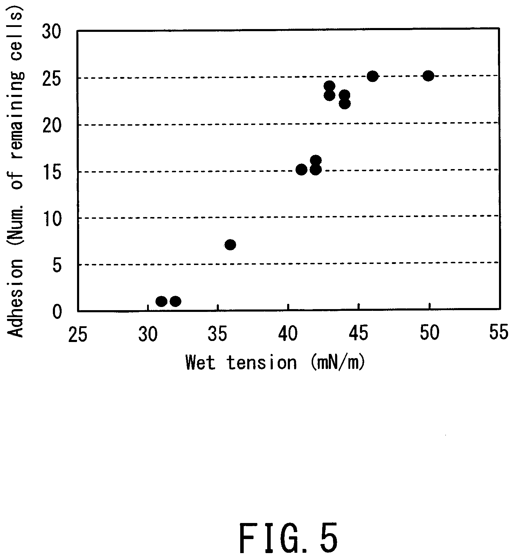

Wet tensions of the surfaces of the OPP films were measured. Then, a curable resin (acrylic UV curable resin "UVT Clear-TEF-046", manufactured by DIC GRAPHICS CORPORATION) was applied onto the inside or outside surfaces of the OPP films, and then was cured with UV irradiation. Thus, cured resin layers having a thicknesses of 1.3 µm were formed. Then, the adhesion between the OPP films (i.e., polyolefin layers) and the cured resin layers were evaluated. The results are presented in Table 2 and Fig. 5

### (Evaluation of Adhesion)

Adhesion of the samples was evaluated in accordance with JIS K5600-5-6. To be specific, a blade was put on each of the OPP films covered with the cured resin layer at a right angle, and six slits were made by the blade at intervals of 2 mm. Further, the direction of the blade was changed by 90°, and other six slits that crosses the already formed six slits at right angles were made by the blade at intervals of 2 mm. Thus, 25 cells were formed on the surface of the film. Then, a tape was attached on the area of the surface of the film in which the cells are formed, and the surface was rubbed over the tape. Finally, the tape was surely torn off at an angle of approximately 60°, and then the number of the cells remaining on the surface of the film was counted by visual observation.

**[Table 2]**

| Example | OPP | | Wet tension (mN/m) | Adhesion (number of remaining cells/25 cells) |
|---|---|---|---|---|
| 7 | | Inside surface | 46 | 25 |
| | | (having easy adhesion layer) | | |
| 8 | OPP<1> | Outside surface | 32 | 1 |
| 8 | | (non-corona treated) | 32 | 1 |
| 9 | | Outside surface | 44 | 23 |
| 9 | | (additionally corona treated) | 44 | 22 |
| 10 | | Inside surface | 41 | 15 |
| | | (corona treated) | | |
| 11 | OPP<2> | Inside surface | 42 | 16 |
| 11 | | (additionally corona treated) | 42 | 15 |
| 12 | | Outside surface | 43 | 24 |
| | | (corona treated) | | |
| 13 | | Outside surface | 43 | 23 |
| | | (additionally corona treated) | | |
| 14 | | Inside surface | 36 | 7 |
| | OPP<3> | (corona treated) | | |
| 15 | | Outside surface | 31 | 1 |
| | | (non-corona treated) | | |
| 16 | OPP<4> | Outside surface | 50 | 25 |
| | | (having easy adhesion layer) | | |

Table 2 indicates that as the wet tension on the surface of the OPP film (i.e., polyolefin layer) is increased, the adhesion between the OPP film (i.e., polyolefin layer) and the cured resin layer is increased. Thus, increasing the wet tension on the surface of the OPP film (i.e., polyolefin layer) is effective in increasing the adhesion between the OPP film (i.e., polyolefin layer) and the cured resin layer. Further, when the wet tension on the surface of the OPP film (i.e., polyolefin layer) is 43 mN/m or higher, the adhesion between the polyolefin layer and the cured resin layer is effectively increased.

### 3. Preparation of Transparent Laminate Film

### <Example 1>

A transparent laminate film according to Example 1 was prepared that has a transparent multilayer having a triple layer structure schematically described below, a pressure-sensitive adhesive layer in contact with the transparent multilayer, a polyolefin layer in contact with the pressure-sensitive adhesive layer, an easy-adhesion layer in contact with the polyolefin layer, and a cured resin layer in contact with the easy-adhesion layer.

To be specific, the transparent laminate film according to Example 1 had a transparent multilayer in which the following layers were laminated sequentially on one surface of the transparent laminate film: a TiO₂ layer formed by a sol-gel method and ultraviolet irradiation (first layer) |a titanium oxide layer layer/an Ag-Cu alloy layer/a titanium oxide layer (second layer)| a TiO₂ layer formed by a sol-gel method and ultraviolet irradiation (third layer).

The titanium oxide layers in the above-described structure were formed by thermal oxidation of metallic Ti layers, and corresponded to barrier layers. The barrier layers are included in the Ag-Cu alloy layer as layers attached to the Ag-Cu alloy layer on counting of the number of the laminated layers.

Specific method for preparation of the transparent laminate film will be provided below.

### (Preparation of Coating Liquid)

First, a coating liquid used in formation of the TiO₂ layer by the sol-gel method was prepared. To be specific, the coating liquid was prepared by adding tetra-n-butoxy titanium tetramer ("B4", manufactured by NIPPON SODA CO., LTD.) as a titanium alkoxide and acetylacetone as an additive forming a ultraviolet absorbing chelate into a mixed solvent consisting of n-butanol and isopropyl alcohol, and by mixing the liquid for 10 minutes with a stirrer. Contents of the tetra-n-butoxy titanium tetramer, acetylacetone, n-butanol, and isopropyl alcohol were 6.75 mass%, 3.38 mass%, 59.87 mass%, and 30.00 mass%, respectively.

### (Formation of Transparent Multilayer)

As the transparent polymer film, a polyethyleneterephthalate film having a thickness of 50 µm and having an easy-adhesion layer on one side thereof ("COSMOSHINE (registered trademark) A4100", manufactured by Toyobo Co., Ltd.) (referred to as "PET film" in the following) was used. On a surface (i.e., PET surface) of the PET film opposite to the surface thereof having the easy-adhesion layer, a TiO₂ layer as the first layer was formed by the following steps.

To be specific, the coating liquid was continuously applied on the PET surface of the PET film using a micro-gravure coater with gravure rolls each having a predetermined groove volume. Next, with an inline drying furnace, the coat film was dried for 80 seconds at a temperature of 100°C, to form a precursor layer for a TiO₂ layer. Next, using an inline ultraviolet irradiation equipment [a high-pressure mercury lamp (160 W/cm)], the precursor layer was continuously irradiated with ultraviolet rays for 1.5 seconds at a same line speed as during the coating process described above. Thus, a TiO₂ layer (first layer) was formed on the PET film by a sol-gel method in which energy of the ultraviolet rays are used during the sol-gel curing. This type of sol-gel method may be referred to as "sol-gel+UV" method in abbreviation in the following.

Next, thin films constituting the second layer were formed on the first layer.

To be specific, a lower-side metallic Ti layer was formed on the TiO₂ layer as the first layer by sputtering with a DC magnetron sputtering equipment. Next, an Ag-Cu alloy layer was formed on the lower-side metallic Ti layer by sputtering. Next, an upper-side metallic Ti layer was formed on the Ag-Cu alloy layer by sputtering.

Conditions for formation of the upper- and lower-side metallic Ti layers were as follows: purity of Ti target: 4N; ultimate pressure: 5×10⁻⁶ Torr; inert gas: Ar; gas pressure: 2.5×10⁻³ Torr; input power: 1.5 kW; and film formation time: 1.1 seconds.

Conditions for formation of the Ag-Cu alloy layer were as follows: Cu content in Ag-Cu alloy target: 4 atom%; ultimate pressure: 5×10⁻⁶ Torr; inert gas: Ar; gas pressure: 2.5×10⁻³ Torr; input power: 1.5 kW; and film formation time: 1.1 seconds.

Next, as the third layer, a TiO₂ layer was formed by the "sol-gel+UV" method on the second layer. A predetermined film thickness was obtained by performing twice the film formation steps in accordance with the formation steps for the first layer.

Next, the film having the transparent multilayer obtained was subjected to heat treatment in a heating furnace in an atmosphere of air at a temperature of 40°C for 300 hours to thermally oxidize the metallic Ti layers contained in the multilayer into titanium oxide layers.

Refractive indices of the TiO₂ layers were measured with "FilmTek 3000" (manufactured by SCIENTIFIC COMPUTING INTERNATIONAL) at a measurement wavelength of 633 nm.

Contents of the organic components in the TiO₂ layers were measured with x-ray photoelectron spectroscopy (XPS).

EDX analysis was performed for the titanium oxide layers formed by thermal oxidization of the metallic Ti layers, and Ti/O ratios were obtained as follows.

To be specific, a test specimen having a thickness of 100 nm or smaller in a cross-sectional direction of the film having the transparent multilayer containing the titanium oxide layer (i.e., barrier layer) to be analyzed was prepared by cutting the transparent laminate film using a microtome ("ultrome V2088", manufactured by LKB). A cross section of the prepared test specimen was observed with a field emission electron microscope (HRTEM) ("JEM2001F", manufactured by JEOL LTD.). Further, by using an EDX equipment (with a spectral resolution of 133 eV or smaller) ("JED-2300T", manufactured by JEOL LTD.), an electron beam was emitted from an electron gun of the EDX equipment and was made incident to a vicinity of the thickness-direction center of the titanium oxide layer (i.e., barrier layer) to be analyzed. Analysis of constituent elements of the titanium oxide layer (i.e., barrier layer) was performed by detecting and analyzing emitted characteristic x rays.

The content of the additive element (i.e., Cu) in the alloy layer was estimated as follows: under the film formation conditions, a test specimen was separately prepared by forming an Ag-Cu alloy layer on a glass substrate. The test specimen was immersed in a 6% solution of HNO₃. After elution by ultrasonication for 20 minutes, the Cu content in the test specimen was estimated using the obtained sample solution by an ICP analysis method combined with a preconcentration technique.

Thicknesses of the layers were measured by cross-sectional observation of the test specimen with the field emission electron microscope (HRTEM) ("JEM2001F", manufactured by JEOL LTD.).

Table 3 illustrates detailed laminate configuration of the transparent multilayer.

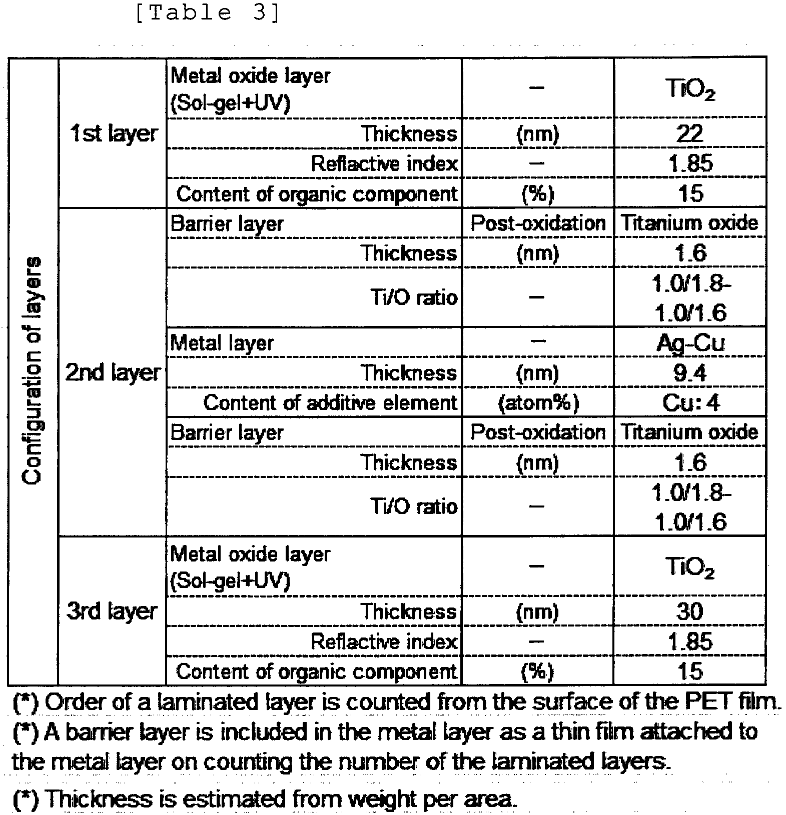

### (Formation of Pressure-sensitive Adhesive) Layer)

An acrylic resin-based pressure-sensitive adhesive ("base compound: BPS5260, curing agent: "BHS8515", manufactured by TOYO INK CO. , LTD.) was applied onto the surface of the transparent multilayer. Thus, a pressure-sensitive adhesive layer (having a thickness of 1.5 µm) was formed.

### (Formation of Polyolefin Layer)

An OPP film (OPP<1>; "P2111", manufactured by TOYOBO CO., LTD.; thickness: 20 µm; inside surface: having an easyadhesivelayer;outsidesurface:non-coronatreated) was prepared, and the (non-corona treated) outside surface of the OPP film was additionally corona treated. The (additionally corona treated) outside surface of the OPP film (OPP <1>) film was put on the pressure-sensitive adhesive layer, and was made adhere to the pressure-sensitive adhesive layer by application of pressure. Thus, a polyolefin layer (having a thickness of 20 µm) was formed.

### (Formation of Cured Resin Layer <1>)

A coating liquid was prepared by dilution of an ultraviolet curable acrylic resin ("UVT clear-TEF-046", manufactured by DIC CORPORATION) with MEK into a concentration of 20%. The coating liquid was applied onto the inside surface (having the easy-adhesion layer) of the polyolefin layer. The prepared coat film was dried at 100°C for two minutes, and then was irradiated with ultraviolet at an intensity of 400 mJ/cm². Thus, a cured resin layer <1> (having a thickness of 1.3 µm) was formed. By the processes described above, a transparent laminate film according to Example 1 was produced.

### (Examples 2 to 9)

Transparent laminate films according to Examples 2 to 9 were produced in the same manner as the film according to Example 1 except that the thickness of the pressure-sensitive adhesive layer or the cured resin layer <1> was changed.

### (Example 10)

A transparent laminate film according to Example 10 was produced in the same manner as the film according to Example 1 except that the (non-corona treated) outside surface of the OPP film (OPP <1>) was brought into contact with the pressure-sensitive adhesive layer without additional corona treatment, and was made adhere to the pressure-sensitive adhesive layer by application of pressure, to form a polyolefin layer (having a thickness of 20 µm).

### (Example 11)

A transparent laminate film according to Example 11 was produced in the same manner as the film according to Example 1 except that another OPP film (OPP <3>; "EM-501", manufactured by OJI SPECIALTY PAPER CO. , LTD. ; thickness: 15 µm; inside surface: corona treated; outside surface: non-corona treated) was used instead of the OPP <1>. The (corona treated) inside surface of the OPP film (OPP <3>) was brought into contact with the pressure-sensitive adhesive layer, and was made adhere to the pressure-sensitive adhesive layer by application of pressure, to form a polyolefin layer (having a thickness of 15 µm). The cured resin layer <1> was formed on the (non-corona treated) outside surface of the OPP film.

### (Example 12)

A transparent laminate film according to Example 12 was produced in the same manner as the film according to Example 11 except that the OPP <3> was placed reversely: the (non-corona treated) outside surface was in contact with the pressure-sensitive adhesive layer while the (corona treated) inside surface was in contact with the cured resin layer <1>.

### (Example 13)

A transparent laminate film according to Example 13 was produced in the same manner as the film according to Example 1 except that another OPP film (OPP <2>; "FOR-2", manufactured by FUTAMURA CHEMICAL CO., LTD. ; thickness: 15 µm; inside surface: corona treated; outside surface: corona treated) was used instead of the OPP <1>. The (corona treated) inside surface of the OPP film (OPP <2>) was brought into contact with the pressure-sensitive adhesive layer, and was made adhere to the pressure-sensitive adhesive layer, to form a polyolefin layer (having a thickness of 15 µm). The cured resin layer <1> was formed on the (corona treated) outside surface of the OPP film.

### (Example 14)

A transparent laminate film according to Example 14 was produced in the same manner as the film according to Example 13 except that the OPP <2> was placed reversely: the (corona treated) outside surface was in contact with the pressure-sensitive adhesive layer while the (corona treated) inside surface was in contact with the cured resin layer <1>.

### (Examples 15 to 18)

Transparent laminate films according to Examples 15 to 18 were produced in the same manner as the film according to Example 1 except that the thickness of the pressure-sensitive adhesive layer was changed.

### (Comparative Example 1)

A transparent laminate film according to Comparative Examples 1 was produced in the same manner as the film according to Example 1 except that the cured resin layer <1> (having a thickness of 1.0 µm) was formed directly in contact with the surface of the transparent multilayer without a pressure-sensitive adhesive layer and a polyolefin layer.

### (Comparative Example 2)

### (Formation of Cured Resin Layer <2>)

A coating liquid was prepared by dilution of an ultraviolet curable acrylic resin ("UC Sealer-TE-025", manufactured by DIC CORPORATION) with MEK into a concentration of 20%. The coating liquid was applied onto the surface of the transparent multilayer. The prepared coat film was dried at 100°C for two minutes, and then was irradiated with ultraviolet at an intensity of 400 mJ/cm². Thus, a cured resin layer <2> (having a thickness of 0.8 µm) was formed.

### (Formation of Cured Resin Layer <1>)

A cured resin layer <1> (having a thickness of 1.0 µm) was formed on the surface of the cured resin layer <2>. Thus, a transparent laminate film according to Comparative Example 2 was produced.

### 4. Properties of Transparent Laminate Films

The following properties were evaluated for the transparent laminate films according to Examples and Comparative Examples. For the evaluation, an acrylic adhesive sheet having a thickness of 25 µm ("5402", manufactured by SEKISUI CHEMICAL CO., LTD.) was attached onto a surface of each transparent laminate film opposite to the surface having the transparent multilayer. Further, an adhesive layer of the adhesive sheet was attached onto a surface of a plate glass. Measuring beams were injected from the surface of the glass plate as a separator surface.

### (Thermal Insulation Property)

Normal emittances of the separator surface and the film surface of each of the samples were evaluated in accordance with JIS R3106. Thermal transmittance was also evaluated (in the unit of W/m²K) in accordance with JIS A5759.

### (Adhesion between Polyolefin Layer and Curable Resin Layer, between Curable Resin Layers <1> and <2>, and between Curable Resin Layer and Transparent Multilayer>

Adhesion between the polyolefin layer and the curable resin layer, between the curable resin layers <1> and <2>, and between the curable resin layer and the transparent multilayer was measured in accordance with JIS K5600-5-6 for each of the samples.

### (Adhesion Between Polyolefin Layer and Pressure-sensitive Adhesive Layer)

Adhesion between the polyolefin layer and the pressure-sensitive adhesive layer was measured in accordance with JIS A5759 for each of the samples.

### (Scratch Resistance)

The surface of each of the samples was each rubbed with steel wool ("Bon Star No. 0000", manufactured by NIHON STEEL CO., LTD), by reciprocating the steel wool on the sample surface ten times with a load of 500 g applied on the steel wool. Samples on which no scratch was observed were regarded as good while samples on which scratches were observed were regarded as bad.

### (Salt-water Corrosion at Edge)

Each of the sample films was attached onto a 50-mm square glass with water. Immediately after the attachment to the glass, the film was cut into a 30-mm square piece. Salt water having an NaCl concentration of 1000ppm was dropped on an edge of the sample piece. The sample piece was placed into a thermohygrostat chamber (at 50°C and 95%RH) before dried. Progress of corrosion from the edge of the film into the inside was visually observed in real time, and a length at which the corrosion occurred (i. e. , corrosion width) was measured with a ruler. If the corrosion width was 2 mm or smaller in 105 hours after the sample piece had been placed into the thermohygrostat chamber, the film was regarded as good, having excellent resistance to salt-water corrosion at the edge. On the other hand, if the corrosion width was larger than 2 mm, the film was regarded as bad, having poor resistance to salt-water corrosion at the edge.

### (Salt-water Corrosion on Surface)

Each of the sample films was attached onto a glass with water. Salt water having an NaCl concentration of 1000ppm was dropped on a surface of the film. The sample was placed into a thermohygrostat chamber (at 50°C and 95%RH) before dried. Progress of corrosion inside the film was visually observed in real time. If corrosion inside the film was not observed in 24 hours after the sample had been placed into the thermohygrostat chamber, the film was regarded as good, having excellent resistance to salt-water corrosion on the surface. On the other hand, if corrosion inside the film was observed, the sample was regarded as bad, having poor resistance to salt-water corrosion on the surface.

### (Damage during Attachment)

Whether the films sustain damage during attachment thereof was examined by visual observation. To be specific, each of the films was bent to simulate bending applied to the film during attachment thereof. The film was left in a thermohygrostat chamber (at 60°C and 90%RH) for 24 hours while keeping bent. Then, whether the transparent multilayer of the film suffered discoloration was examined by visual observation. Discoloration of the multilayer corresponds to damage in the multilayer. If the transparent multilayer sustained damage, the film was regarded as bad. If the transparent multilayer did not sustain damage, the film was regarded as good.

### (Solar-radiation Shielding Property)

Solar-radiation shielding properties of the films were evaluated in accordance with JIS A5759. To be specific, solar transmittance and solar reflectance of each of the films were calculated based on transmission and reflection spectra of the film in a wavelength range of 300 to 2500 nm measured with a spectrometer ("UV3100", manufactured by SHIMADZU CORPORATION). Based on the solar transmittance, solar reflectance, and corrected emissivity, solar shading coefficient of the film was calculated.

Tables 4 and 5 show schematic features of the protective layers in the transparent laminate films and results of the evaluations.

**[Table 4]**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Cured resin layer <1> | Thickness (µm) | 1.3 | 1.0 | 1.0 | 1.3 | 1.9 | 0.6 | 1.3 | 2.3 | 1.3 | 1.3 |
| Cured resin layer <2> | Thickness (µm) | - | - | - | - | - | - | - | - | - | - |
| Polyolefin layer | Type | OPP <1> | OPP <1> | OPP <1> | OPP <1> | OPP <1> | OPP <1> | OPP <1> | OPP <1> | OPP <1> | OP <1> |
| | Thickness (µm) | 20 | 20 | 20 | 20 | 20 | 20 | 20 | 20 | 20 | 20 |
| | Wet tension (facing cured resin layer) | 48 | 48 | 48 | 48 | 48 | 48 | 48 | 48 | 48 | 48 |
| | Wet tension (facing pressure-sensitive adhesive layer) | 44 | 44 | 44 | 44 | 44 | 44 | 44 | 44 | 44 | 32 |
| Pressure-sensitive adhesive layer | Thickness (µm) | 1.5 | 1.5 | 2.6 | 1.0 | 1.0 | 1.5 | 0.7 | 1.5 | 3.1 | 1.5 |
| Heat insulation property (thermal transmittance) | | 4.5 | 4.5 | 4.5 | 4.5 | 4.5 | 4.5 | 4.5 | 4.7 | 4.6 | 4.5 |
| Adhesion (between cured resin layer & polyolefin layer) | | 25/25 | 25/25 | 25/25 | 25/25 | 25/25 | 25/25 | 25/25 | 25/25 | 25/25 | 25/25 |
| Adhesion (between pressure-sensitive adhesive layer & polyolefin layer) | | 8.3 | 8.3 | 8.3 | 8.3 | 8.3 | 8.3 | 8.3 | 8.3 | 8.3 | 8.3 |
| Scratch resistance | | Good | Good | Good | Good | Good | Good | Good | Good | Moderate | Good |
| Resistance to salt-water corrosion on surface | | Good | Good | Good | Good | Good | Good | Good | Good | Good | Good |
| Resistance to salt-water corrosion at edge | | Good | Good | Good | Good | Good | Good | Good | Good | Good | Good |
| Damage during attachment | | Good | Good | Good | Good | Good | Good | Good | Good | Good | Good |
| Solar-radiation shielding property | | Good | Good | Good | Good | Good | Good | Good | Good | Good | Good |

**[Table 5]**

| | | Example | | | | Comparative Ex. | |
|---|---|---|---|---|---|---|---|
| | | 11 | 12 | 13 | 14 | 1 | 2 |
| Cured resin layer <1> | Thickness (µm) | 1.3 | 1.3 | 1.3 | 1.3 | 1.0 | 1.0 |
| Cured resin layer <2> | Thickness (µm) | - | - | - | - | - | 0.8 |
| Polyolefin layer | Type | OPP<3> | OPP<3> | OPP <2> | OPP <2> | - | - |
| | Thickness (µm) | 15 | 15 | 15 | 15 | - | - |
| | Wet tension (facing cured resin layer) | 31 | 36 | 43 | 41 | - | - |
| | Wet tension (facing pressure-sensitive adhesive layer) | 36 | 31 | 41 | 43 | - | - |
| Pressure-sensitive adhesive layer | Thickness (µm) | 1.5 | 1.5 | 1.5 | 1.5 | - | - |
| Heat insulation property (thermal transmittance) | | 4.5 | 4.5 | 4.5 | 4.5 | 4.1 | 4.4 |
| Adhesion (between cured resin layer & polyolefin layer) | | 1/25 | 7/25 | 23/25 | 15/25 | - | - |
| Adhesion (between pressure-sensitive adhesive layer & polyolefin layer) | | 6.5 | 0.5 | 7.0 | 9.2 | - | - |
| Adhesion (between cured resin layers <1> & <2>) | | - | - | - | - | - | 25/25 |
| Adhesion (between cured resin layer & transparent multilayer) | | - | - | - | - | 0/25 | 25/25 |
| Scratch resistance | | Good | Good | Good | Good | Good | Good |
| Resistance to salt-water corrosion on surface | | Good | Good | Good | Good | Bad | Bad |
| Resistance to salt-water corrosion at edge | | Good | Good | Good | Good | Bad | Bad |
| Damage during attachment | | Good | Good | Good | Good | Bad | Bad |
| Solar-radiation shielding property | | Good | Good | Good | Good | Good | Good |

In Comparative Example 1, the cured resin layer <1> was formed directly on the surface of the transparent multilayer. Thus, the adhesion of the cured resin layer <1> was low. Further, corrosion from both the surface and edge of the film was observed in the salt-water corrosion tests. A presumed reason for the corrosion is that the metal oxide layer in contact with the cured resin layer <1> was peeled off by curing shrinkage of the cured resin layer <1>, and the salt water intruded from the edge of the film into the inside. Another presumed reason for the corrosion is that cracks were formed on the surface by the large curing shrinkage of the cured resin layer <1>, and the salt water intruded from the surface into the inside. Further, in Comparative Example 1, the transparent multilayer sustained damage during the attachment thereof. The transparent laminate film according to Comparative Example 2 had the cured resin layer <2> between the transparent multilayer and the cured resin layer <1>. Corrosion fromboth the surface and edge was observed in the salt-water corrosion tests, and the transparent multilayer sustained damage during the attachment thereof, also in case of Comparative Example 2.

Meanwhile in all Examples, corrosion from either the surface or the edge was not observed in the salt-water corrosion tests. The transparent multilayers did not sustain damage during the attachment thereof. Further, it was confirmed that the transparent laminate films according to Examples had excellent solar-radiation shielding properties, thermal insulation properties, and scratch resistances.

Comparing the transparent laminate films according to Examples 1, 2, 6, and 8, the film according to Example 6 had the relatively low scratch resistance, having the relatively thin cured resin layer <1>. The film according to Example 8 had the relatively low thermal insulation property, having the relatively thick cured resin layer <1>. Comparing the transparent laminate films according to Examples 1, 4, 7, 9, and 15-18, the film according to Example 7 had the relatively low adhesion between the polyolefin layer and the pressure-sensitive adhesive layer, having the relatively thin
pressure-sensitive adhesive layer. The film according to Example 18 had the relatively low thermal insulation property, having the relatively thick pressure-sensitive adhesive layer.

The foregoing description of the preferred embodiments of the present invention has been presented for purposes of illustration and description; however, it is not intended to be exhaustive or to limit the present invention to the precise form disclosed, and modifications and variations are possible as long as they do not deviate from the scope of the present invention.

## Claims

1. A transparent laminate film (10) comprising:
a transparent polymer film (12);
a transparent multilayer (14) placed above the transparent polymer film, the transparent multilayer comprising one or more metal oxide layers and one or more metal layers laminated alternately;
a pressure-sensitive adhesive layer (16) placed above and in contact with the transparent multilayer;
a polyolefin layer (18) placed above and in contact with the pressure-sensitive adhesive layer; and
a cured resin layer (20) placed above the polyolefin layer.

2. The transparent laminate film according to claim 1, wherein the pressure-sensitive adhesive layer comprises an acrylic, silicone, or urethane resin-based pressure-sensitive adhesive.

3. The transparent laminate film according to claim 1 or 2, wherein one of the metal oxide layers of the transparent multilayer is in contact with the pressure-sensitive adhesive layer.

4. The transparent laminate film according to any one of claims 1 to 3, wherein the metal oxide layers are titanium oxide layers containing organic components, and the metal layers are silver alloy layers.

5. The transparent laminate film according to any one of claims 1 to 4, wherein the polyolefin layer has a wet tension of 35 mN/m or higher on a surface thereof in contact with the pressure-sensitive adhesive layer.

6. The transparent laminate film according to claim 5, wherein the surface of the polyolefin layer in contact with the pressure-sensitive adhesive layer is corona treated.

7. The transparent laminate film according to any one of claims 1 to 6, wherein the transparent laminate film comprises a layer, in contact with the cured resin layer, that has a wet tension of 43 mN/m or higher on a surface thereof in contact with the cured resin layer.

8. The transparent laminate film according to any one of claims 1 to 7, wherein the transparent laminate film comprises an easy-adhesion layer (22) on a surface of the polyolefin layer facing the cured resin layer, the easy-adhesion layer being in contact with the cured resin layer.

9. The transparent laminate film according to claim 8, wherein the easy-adhesion layer is a modified polyolefin layer that comprises a polar functional group on a surface thereof in contact with the cured resin layer.

10. The transparent laminate film according to any one of claims 1 to 9, wherein the pressure-sensitive adhesive layer has a thickness within a range of 1.0 to 5.0 µm.

11. The transparent laminate film according to any one of claims 1 to 10, wherein the cured resin layer has a thickness within a range of 1.0 to 2.0 µm.

12. The transparent laminate film according to any one of claims 1 to 11, wherein the polyolefin layer has a thickness within a range of 10 to 30 µm.

13. The transparent laminate film according to claim 2, wherein the pressure-sensitive adhesive layer comprises the acrylic resin-based pressure-sensitive adhesive.

14. The transparent laminate film according to claim 4, wherein the titanium oxide layers containing the organic components are layers formed by a sol-gel method in which an optical energy is applied during a so-gel curing.

15. The transparent laminate film according to any one of claims 1 to 14, wherein the polyolefin layer consists of a polyolefin film.

## Patentansprüche

1. Transparente Laminatfolie (10), umfassend:
eine transparente Polymerfolie (12);
eine transparente Mehrfachschicht (14), positioniert über der transparenten Polymerfolie, wobei die transparente Mehrfachschicht eine oder mehrere Metalloxidschichten und eine oder mehrere Metallschichten abwechselnd laminiert umfasst;
eine druckempfindliche Haftmittelschicht (16), positioniert über und in Kontakt mit der transparenten Mehrfachschicht;
eine Polyolefinschicht (18), positioniert über und in Kontakt mit der druckempfindlichen Haftmittelschicht; und
eine gehärtete Harzschicht (20), positioniert über der Polyolefinschicht.

2. Transparente Laminatfolie nach Anspruch 1, wobei die druckempfindliche Haftmittelschicht ein druckempfindliches Hautmittel auf Basis von Acryl-, Silikon- oder Urethan-Harz umfasst.

3. Transparente Laminatfolie nach Anspruch 1 oder 2, wobei eine der Metalloxidschichten der transparenten Mehrfachschicht in Kontakt mit der druckempfindlichen Haftmittelschicht ist.

4. Transparente Laminatfolie nach einem der Ansprüche 1 bis 3, wobei die Metalloxidschichten Titanoxidschichten, enthaltend organische Bestandteile, sind und die Metallschichten Silberlegierungsschichten sind.

5. Transparente Laminatfolie nach einem der Ansprüche 1 bis 4, wobei die Polyolefinschicht eine Nassdehnung von 35 mN/m oder mehr auf einer Oberfläche davon, die in Kontakt mit der druckempfindlichen Haftmittelschicht ist, aufweist.

6. Transparente Laminatfolie nach Anspruch 5, wobei die Oberfläche der Polyolefinschicht, die in Kontakt mit der druckempfindlichen Haftmittelschicht ist, koronabehandelt ist.

7. Transparente Laminatfolie nach einem der Ansprüche 1 bis 6, wobei das transparente Laminatfolie eine Schicht umfasst, die in Kontakt mit der gehärteten Harzschicht ist und eine Nassdehnung von 43 mN/m oder mehr auf einer Oberfläche davon, die in Kontakt mit der gehärteten Harzschicht ist, aufweist.

8. Transparente Laminatfolie nach einem der Ansprüche 1 bis 7, wobei die transparente Laminatfolie eine leichtklebende Schicht (22) auf einer Oberfläche der Polyolefinschicht gegenüber der gehärteten Harzschicht umfasst, wobei die leichtklebende Schicht in Kontakt mit der gehärteten Harzschicht ist.

9. Transparente Laminatfolie nach Anspruch 8, wobei die leichtklebende Schicht eine modifizierte Polyolefinschicht ist, die eine polare funktionelle Gruppe auf einer Oberfläche davon, die in Kontakt mit der gehärteten Harzschicht ist, umfasst.

10. Transparente Laminatfolie nach einem der Ansprüche 1 bis 9, wobei die druckempfindliche Haftmittelschicht eine Dicke innerhalb eines Bereichs von 1,0 bis 5,0 µm aufweist.

11. Transparente Laminatfolie nach einem der Ansprüche 1 bis 10, wobei die gehärtete Harzschicht eine Dicke innerhalb eines Bereichs von 1,0 bis 2,0 µm aufweist.

12. Transparente Laminatfolie nach einem der Ansprüche 1 bis 11, wobei die Polyolefinschicht eine Dicke innerhalb eines Bereichs von 10 bis 30 µm aufweist.

13. Transparente Laminatfolie nach Anspruch 2, wobei die druckempfindliche Haftmittelschicht das druckempfindliche Haftmittel auf Basis von Acrylharz umfasst.

14. Transparente Laminatfolie nach Anspruch 4, wobei die Titanoxidschichten, enthaltend die organischen Bestandteile, Schichten sind, die durch ein Sol-Gel-Verfahren gebildet sind, in welchem eine optische Energie während einer Sol-Gel-Härtung angewendet wird.

15. Transparente Laminatfolie nach einem der Ansprüche 1 bis 14, wobei die Polyolefinschicht aus einer Polyolefinfolie besteht.

## Revendications

1. Un film stratifié transparent (10) comprenant :
un film polymère transparent (12);
une multicouche transparente (14) placée au-dessus du film polymère transparent, la multicouche transparente comprenant une ou plusieurs couches d'oxyde de métal et une ou plusieurs couches de métal stratifiées en alternance;
une couche adhésive sensible à la pression (16) placée au-dessus et en contact avec la multicouche transparente;
une couche de polyoléfine (18) placée au-dessus et en contact avec la couche adhésive sensible à la pression; et
une couche de résine durcie (20) placée au-dessus de la couche de polyoléfine.

2. Le film stratifié transparent selon la revendication 1, dans lequel la couche adhésive sensible à la pression comprend un adhésif sensible à la pression à base de résine acrylique, siliconée ou uréthane.

3. Le film stratifié transparent selon la revendication 1 ou 2, dans lequel une des couches d'oxyde de métal de la multicouche transparente est en contact avec la couche adhésive sensible à la pression.

4. Le film stratifié transparent selon l'une quelconque des revendications 1 à 3, dans lequel les couches d'oxyde de métal sont des couches d'oxyde de titane contenant des composants organiques, et les couches de métal sont des couches d'alliage d'argent.

5. Le film stratifié transparent selon l'une quelconque des revendications 1 à 4, dans lequel la couche de polyoléfine a une tension de mouillage de 35 mN/m ou plus sur une surface de celle-ci en contact avec la couche adhésive sensible à la pression.

6. Le film stratifié transparent selon la revendication 5, dans lequel la surface de la couche de polyoléfine en contact avec la couche adhésive sensible à la pression est traitée par effet corona.

7. Le film stratifié transparent selon l'une quelconque des revendications 1 à 6, dans lequel le film stratifié transparent comprend une couche, en contact avec la couche de résine durcie, qui présente une tension de mouillage de 43 mN/m ou plus, sur une surface de celle-ci en contact avec la couche de résine durcie.

8. Le film stratifié transparent selon l'une quelconque des revendications 1 à 7, dans lequel le film stratifié transparent comprend une couche d'adhérence facile (22) sur une surface de la couche de polyoléfine faisant face à la couche de résine durcie, la couche d'adhérence facile étant en contact avec la couche de résine durcie.

9. Le film stratifié transparent selon la revendication 8, dans lequel la couche d'adhérence facile est une couche de polyoléfine modifiée qui comprend un groupement fonctionnel polaire sur une surface de celle-ci en contact avec la couche de résine durcie.

10. Le film stratifié transparent selon l'une quelconque des revendications 1 à 9, dans lequel la couche adhésive sensible à la pression a une épaisseur comprise entre 1.0 et 5.0 µm.

11. Le film stratifié transparent selon l'une quelconque des revendications 1 à 10, dans lequel la couche de résine durcie a une épaisseur comprise entre 1.0 et 2.0 µm.

12. Le film stratifié transparent selon l'une quelconque des revendications 1 à 11, dans lequel la couche de polyoléfine a une épaisseur comprise entre 10 et 30 µm.

13. Le film stratifié transparent selon la revendication 2, dans lequel la couche adhésive sensible à la pression comprend un adhésif sensible à la pression à base de résine acrylique.

14. Le film stratifié transparent selon la revendication 4, dans lequel les couches d'oxyde de titane contenant les composants organiques sont des couches formées par le procédé sol-gel dans lequel une énergie optique est appliquée pendant un durcissement sol-gel.

15. Le film stratifié transparent selon l'une quelconque des revendications 1 à 14, dans lequel la couche de polyoléfine est constituée d'un film de polyoléfine.
